# EUROPEAN PATENT APPLICATION

(11) **EP 3 594 018 A1**
(43) Date of publication of application: **15.01.2020**
(21) Application number: 18764282.2
(22) Date of filing: 02.03.2018
(51) Int. Cl.: B60B 35/06

(54) **FRONT AXLE BEAM**

(30) Priority: 10.03.2017 JP 2017045599
(71) Applicant: Nippon Steel Corporation, Tokyo 100-8071 (JP)
(72) Inventor: IMANISHI, Kenji, Tokyo 100-8071 (JP); YABUNO, Kunihiro, Tokyo 100-8071 (JP); YOSHIDA, Kunihiro, Tokyo 100-8071 (JP); HWANG, Samsoo, Tokyo 100-8071 (JP); TAMURA, Kenji, Tokyo 100-8071 (JP); ISHIHARA, Koichiro, Tokyo 100-0006 (JP)
(74) Representative: Zimmermann & Partner Patentanwälte mbB
(86) International application number: PCT/JP2018/007972
(87) International publication number: WO 2018/163987

(57) **Abstract**

A disclosed front axle beam (100) includes a beam section (110). The beam section (110) includes a first flange part (131), a second flange part (132), and a web section (120) connecting the first flange part (131) and the second flange part (132). The web section (120) includes a varying-slope section (121) that includes a plurality of first slope sections and a plurality of second slope sections. Each of the plurality of first slope sections inclines in one direction with respect to the vehicle-height direction in a cross section perpendicular to the longitudinal direction (LD). Each of the plurality of second slope sections inclines in the opposite direction to the one direction with respect to the vehicle-height direction in a cross section perpendicular to the longitudinal direction (LD). The first slope section and the second slope section are located in an alternate manner along the longitudinal direction (LD). In this way, the rigidity of the front axle beam (100) can be increased.

## Description

### TECHNICAL FIELD

The present invention relates to a front axle beam, and in particular to a front axle beam used for a vehicle such as a cargo truck and a bus.

### BACKGROUND ART

A front axle beam (which may be hereinafter referred to as "front axle") is primarily used for supporting a vehicle body with front wheels of a vehicle attached thereto. The front axle is an important part for transmitting a load of the vehicle body to the right and left front wheels and for structural safety. The front axle is responsible for traveling stability by fixing the wheels in place and securing steering performance of the front wheels. The front axle also serves as a transmission path for transmitting a braking force for the wheels during braking. As described above, the front axle is a part that has a strong effect on traveling performance, steerability, and braking ability. The front axle is required to have a high rigidity, and thus has a large mass. On the other hand, there is a demand for weight reduction of the front axle in view of improving fuel consumption.

Japanese Patent Application Publication No. 2003-285771 (Patent Literature 1) proposes a front axle that makes it possible to reduce aerodynamic resistance while a vehicle is traveling. The invention described in Patent Literature 1 has an object of improving fuel consumption by reducing the aerodynamic resistance.

Japanese Patent Application Publication No. 10-119504 (Patent Literature 2) discloses a front axle that includes a front axle body formed of light alloy such as aluminum alloy and a reinforcing member formed of a material that has a higher tensile stress than the light alloy.

Japanese Patent Application Publication No. 9-175103 (Patent Literature 3) discloses a front axle formed by aluminum alloy casting in which a steel material is cast in a specific site. The inventions described in Patent Literatures 2 and 3 are intended to reduce weight by using light alloy such as aluminum alloy.

### CITATION LIST

### PATENT LITERATURE

Patent Literature 1: Japanese Patent Application Publication No. 2003-285771
Patent Literature 2: Japanese Patent Application Publication No. 10-119504
Patent Literature 3: Japanese Patent Application Publication No. 9-175103

### SUMMARY OF INVENTION

### TECHNICAL PROBLEM

As a structure for a front axle, there is a demand for a lightweight and highly rigid structure. Specifically, a first need is for the front axle to be lightweight in view of fuel consumption. A second need is a requirement from increasing levels of vehicle motion performance, that is, for achieving safe stoppage of a vehicle when a brake is applied from a higher traveling speed. Accordingly, there is a demand for rigidity that is enough to account for an increased load on the front axle.

In general, these two needs on the front axle, weight reduction and high rigidity, are conflicting requirements. There is now a demand for a new front axle capable of satisfying the conflicting requirements as much as possible.

A front axle capable of satisfying both weight reduction and high rigidity can effectively be used in various scenarios for designs as in the following typical examples.
(1) Such a front axle is in a shape making it possible to effectively increase rigidity of the front axle, and thus it is possible to achieve the same rigidity as a prior art product by a lighter front axle or a more compact front axle than the product. In other words, the weight of a front axle that has the same rigidity can be reduced.
(2) The improvement of rigidity of a front axle can be achieved with the same size or weight as a prior art product or with a slight increase in size or weight as a prior art product. In other words, a lightweight front axle can be provided with high rigidity.

Meanwhile, a front axle is surrounded by densely arranged an engine and moveable parts for steering. As such, the front axle is required to fit in a small space to avoid interference with such peripheral parts. Accordingly, there is a demand particularly for a new technology that enables rigidity to be increased without an increase in size of the front axle.

Under such a situation, an object of the present invention is to provide a front axle beam that makes it possible to increase rigidity while it is compact and lightweight.

### SOLUTION TO PROBLEM

A front axle beam according to an embodiment of the present invention includes a beam section and king-pin attachment sections on both ends of the beam section in a longitudinal direction. The beam section includes a first flange part, a second flange part opposite to the first flange part, and a web section connected with the first flange part and the second flange part in a standing manner. The web section includes a first slope section inclining in one direction with respect to a vehicle-height direction in a cross section of the beam section and a second slope section inclining in an opposite direction to the one direction with respect to the vehicle-height direction in another cross section of the beam section.

### ADVANTAGEOUS EFFECTS OF INVENTION

According to the present invention, there is provided a front axle beam that makes it possible to increase rigidity. The front axle beam can be used to reduce weight or improve performance of a vehicle. In the present invention, the rigidity is improved by using a web section that has a specific shape. Accordingly, the rigidity can be improved without an increase in size of an entire front axle determined by an external shape of the flange.

### BRIEF DESCRIPTION OF DRAWINGS

[FIG. 1] FIG. 1 is a perspective view schematically illustrating a front axle of a first embodiment.
[FIG. 2] FIG. 2 is a perspective view schematically illustrating a varying-slope section of the front axle illustrated in FIG. 1.
[FIG. 3] FIG. 3 is a schematic front view of the front axle illustrated in FIG. 1 as viewed from the front.
[FIG. 4A] FIG. 4A is a schematic view of an example of a horizontal section of the varying-slope section illustrated in FIG. 2.
[FIG. 4B] FIG. 4B is a schematic view of another example of a horizontal section of the varying-slope section illustrated in FIG. 2.
[FIG. 4C] FIG. 4C is a schematic view of another example of a horizontal section of the varying-slope section illustrated in FIG. 2.
[FIG. 5A] FIG. 5A is a schematic view of a cross section taken along a line VA-VA in FIGS. 4A to 4C.
[FIG. 5B] FIG. 5B is a schematic view of a cross section taken along a line VB-VB in FIGS. 4A to 4C.
[FIG. 5C] FIG. 5C is a schematic view of a cross section taken along a line VC-VC in FIGS. 4A to 4C.
[FIG. 6] FIG. 6 is a schematic view illustrating a diagonal structure of the varying-slope section.
[FIG. 7] FIG. 7 illustrates an example of varying slope angle X of the varying-slope section.
[FIG. 8] FIG. 8 is a schematic view illustrating an arch shape of the varying-slope section.
[FIG. 9] FIG. 9 is a schematic view illustrating draft angles of the flange parts.
[FIG. 10] FIG. 10 is a perspective view schematically illustrating a front axle of a second embodiment.
[FIG. 11A] FIG. 11A is a schematic view of an example of a horizontal section of the varying-slope section with respect to the front axle of the second embodiment.
[FIG. 11B] FIG. 11B is a schematic view of another example of a horizontal section of the varying-slope section with respect to the front axle of the second embodiment.
[FIG. 11C] FIG. 11C is a schematic view of another example of a horizontal section of the varying-slope section with respect to the front axle of the second embodiment.
[FIG. 12A] FIG. 12A is a schematic view of a cross section taken along a line XIIA-XIIA in FIGS. 11A to 11C.
[FIG. 12B] FIG. 12B is a schematic view of a cross section taken along a line XIIB-XIIB in FIGS. 11A to 11C.
[FIG. 12C] FIG. 12C is a schematic view of a cross section taken along a line XIIC-XIIC in FIGS. 11A to 11C.
[FIG. 13A] FIG. 13A is a schematic view of an example of a horizontal section of the varying-slope section with respect to a front axle of a third embodiment.
[FIG. 13B] FIG. 13B is a schematic view of another example of a horizontal section of the varying-slope section with respect to the front axle of the third embodiment.
[FIG. 13C] FIG. 13C is a schematic view of another example of a horizontal section of the varying-slope section with respect to the front axle of the third embodiment.
[FIG. 14A] FIG. 14A is a schematic view of a cross section taken along a line XIVA-XIVA in FIGS. 13A to 13C.
[FIG. 14B] FIG. 14B is a schematic view of a cross section taken along a line XIVB-XIVB in FIGS. 13A to 13C.
[FIG. 14C] FIG. 14C is a schematic view of a cross section taken along a line XIVC-XIVC in FIGS. 13A to 13C.
[FIG. 15A] FIG. 15A is a perspective view schematically illustrating another example of an undulating shape.
[FIG. 15B] FIG. 15B is a perspective view schematically illustrating a further example of an undulating shape.
[FIG. 15C] FIG. 15C is a perspective view schematically illustrating a further example of an undulating shape.
[FIG. 16] FIG. 16 is a schematic view for illustrating an example of a die forging process.

### DESCRIPTION OF EMBODIMENTS

As a result of an intense study, the present inventors have newly found that a front axle that makes it possible to increase rigidity can be provided by using a specific structure. The present invention is based on the novel finding.

Embodiments of the present invention will now be described. In the following description, although examples are used to describe the embodiments of the present invention, the present invention is not limited to those examples described below.

When reference is made herein to a direction of a front axle and a member constituting the front axle, it indicates a direction taken while the front axle is disposed in an orientation during use unless otherwise noted. For example, unless otherwise noted, an up-down direction of a front axle denotes an up-down direction taken while the front axle is disposed in an orientation during use (a direction parallel to the direction of gravity and a vertical direction Vt as described later). The up-down direction (vertical direction) is in the same direction as the vehicle-height direction. The front axle is provided with king-pin attachment sections on ends thereof. The vehicle-height direction can be identified based on the shape of the king-pin attachment section. This is because a king pin is attached along the vehicle-height direction. Similarly, a horizontal direction and a front-back direction also indicate directions taken while the front axle is disposed in an orientation during use. In other words, the horizontal direction is correctly a vehicle-width direction. The vehicle-width direction can be identified based on positions of the king-pin attachment sections. This is because king pins are attached on both sides in the width of the vehicle. It should be noted that "front" or "frontward" and "rear" or "rearward" of a front axle respectively indicate the same "front" or "frontward" (direction Fw as described later) and "rear" or "rearward" directions of a vehicle on which the front axle is disposed. However, when the front axle is front-back symmetric, any one direction is front and the other is rear. The "front" or "frontward" and "rear" or "rearward" directions are in a vehicle-length direction. The vehicle-length direction can be identified based on the vehicle-height direction and the vehicle-width direction. In so far as it can be determined from the context without any explanation, the term "cross section" indicates a section perpendicular to the longitudinal direction ("longitudinal direction LD" as described later) of the front axle.

### (Front Axle Beam)

A front axle (front axle beam) of the embodiment includes a beam section and king-pin attachment sections on both ends of the beam section in a longitudinal direction. The beam section includes a first flange part, a second flange part opposite to the first flange part, and a web section connected with the first flange part and the second flange part in a standing manner. The web section includes a first slope section inclining in one direction with respect to a vehicle-height direction in a cross section of the beam section, and a second slope section inclining in an opposite direction to the one direction with respect to the vehicle-height direction in another cross section of the beam section. The first slope section and the second slope section are preferably located in an alternate manner in the longitudinal direction. It should be noted that the cross section of the beam section indicates a section perpendicular to the longitudinal direction of the beam section.

In another aspect, the front axle of the embodiment includes a beam section and two king-pin attachment sections. The two king-pin attachment sections are provided on both ends, in the longitudinal direction, of the beam section to which the respective king-pin attachment section corresponds. A hole provided in the king-pin attachment section for accommodating a king pin is bored in the vehicle-height direction. The beam section includes a first flange part located on the top, a second flange part located below the first flange part, and a web section connecting the first flange part and the second flange part. The longitudinal direction of the beam section may hereinafter be referred to as "longitudinal direction LD".

The web section includes a varying-slope section that includes a plurality of first slope sections and a plurality of second slope sections. Each of the plurality of first slope sections inclines in one direction with respect to the vertical direction (up-down direction, vehicle-height direction) in a cross section perpendicular to the longitudinal direction. Each of the plurality of second slope sections inclines in the opposite direction to the one direction with respect to the vertical direction in a cross section perpendicular to the longitudinal direction. The first slope section and the second slope section are located in an alternate manner along the longitudinal direction LD.

A conventional web section has a plate-like shape (straight shape) generally in parallel to the vertical direction. In this case, the front axle has anisotropy in its rigidity. In other words, the front axle is resistant to bending in the vehicle-height direction while it is vulnerable to bending in the vehicle-length direction relative to that in the vehicle-height direction. Accordingly, it is desirable to improve the rigidity against the bending in the vehicle-length direction. To this end, the web section of the embodiment has the first slope sections and the second slope sections inclining in opposite directions to each other with respect to the vehicle-height direction. This helps to reduce the strength anisotropy of the front axle. The anisotropy distribution of rigidity anywhere in the front axle where the first slope sections and the second slope sections are unevenly located may differ from the anisotropy distribution of rigidity of a location where the slope sections are evenly located, leading to an imbalance. Accordingly, the first slope sections and the second slope sections are preferably located in an alternate manner along the vehicle-width direction (longitudinal direction LD). In addition, the first slope sections and the second slope sections are preferably adjacent to each other. According to the configuration, as described later, a diagonal structure is formed at a position where a first slope section and a second slope section are adjacent to each other, and thus the rigidity of the front axle can be increased. In one aspect, the web section includes a varying-slope section that has slopes varying with respect to the vehicle-height direction (vertical direction). The varying-slope section is, for example, an undulating section where the surface is varying in an undulating manner. The remaining sections in the web section except the varying-slope section may have a straight shape similar to the conventional web section described above.

The first slope sections and the second slope sections are connected such that they are located in an alternate manner. In this regard, there may be an uninclined section with respect to the vertical direction between the first slope section and the second slope section.

In a cross section perpendicular to the longitudinal direction LD, the varying-slope section may or may not be in a straight-line shape, and may include both a straight-line portion and a curved portion. The first and second slope sections may include a portion parallel to the vertical direction independently from each other.

A total of the number of the first slope sections and the number of the second slope sections may be 5 or more or may be 6 or more (3 wavelengths or more). An upper limit is not particularly placed on the number of slope sections and any number of slope sections may be determined depending on the length or required characteristics of the varying-slope section. As one example, the total of the number of the first slope sections and the number of the second slope sections may be 50 or less. In the case in which the varying-slope section is right-left symmetric with respect to the center in the longitudinal direction of the front axle, the number of any one of the first and second slope sections is larger by one than the number of the other.

The varying-slope section is formed on at least a part of the web section. The varying-slope section may be formed over the entire web section in the longitudinal direction or may be formed only on a part of the web section in the longitudinal direction. An exemplary varying-slope section is formed over an entire part or on a part of a region between two spring attachment seats. Since the region is long in the longitudinal direction, applying the varying-slope section in the region provides a large weight-reduction effect. Specifically, given waves having certain wavelengths, the number of waves can be increased by forming the varying-slope section in the region. Further, in the region, since the flange part has a small variation in shape, identical undulating shapes can be formed in a repeated manner. Accordingly, forming the varying-slope section in a region between two spring attachment seats has advantages of increased die releasability in a production method involving a die forging process, and of easiness of die designing. Another exemplary varying-slope section may be formed in a region except the region between two spring attachment seats (for example, a region between the spring attachment seat and the king-pin attachment section) in addition to the entire part or on a part of the region between two spring attachment seats.

A maximum absolute value of a slope angle of the varying-slope section with respect to the vertical direction is limited depending on the amount of protrusion of the flange part from the web section and the height of the web section. The slope angle of the varying-slope section with respect to the vertical direction may be, for example, within the range of 5° to 45°. The angle (angle X) will be described in a first embodiment.

Primary rigidities required for the front axle include a rigidity against bending in the up-down direction (vehicle-height direction, vertical direction), a rigidity against bending in the front-back direction (vehicle-length direction), and a torsional rigidity. According to the front axle of the embodiment, these rigidities can be improved.

A connecting section (which may be hereinafter referred to as "first connecting section") between the web section and the first flange part has a bulging shape in the vehicle-length direction on the first flange part. A connecting section (which may be hereinafter referred to as "second connecting section") between the web section and the second flange part has a bulging shape in the vehicle-length direction on the second flange part. One of the first connecting section and the second connecting section may have a bulging shape in the vehicle-length direction, and both of the first connecting section and the second connecting section may each have a bulging shape in the vehicle-length direction.

In another aspect, in the varying-slope section, at least one connecting section selected from the first connecting section between the web section and the first flange part and the second connecting section between the web section and the second flange part may have an undulating shape that is undulated along the longitudinal direction LD. Examples of undulating shape include an undulating shape composed of curves (for example, a sine-wave undulating shape) and an undulating shape including a straight line portion (for example, a rectangular-wave undulating shape and a triangular-wave undulating shape).

In the case in which both of the first connecting section and the second connecting section each have a bulging shape in the vehicle-length direction, the first slope section and the second slope section are preferably in a straight-line shape in a section in the middle between the first flange part and the second flange part.

In another aspect, in the varying-slope section, both of the first connecting section and the second connecting section may each have the above-described undulating shape. In this case, the phase of the undulating shape of the second connecting section is preferably substantially in opposite phase with respect to the phase of the undulating shape of the first connecting section. The phrase "substantially in opposite phase" as used herein means that the phase of the undulating shape of the first connecting section and the phase of the undulating shape of the second connecting section are shifted from each other by about 180° (for example, within the range of 160° to 200° and typically 180°) along the longitudinal direction LD.

The bulging shape in the vehicle-length direction preferably has a shape that includes 6 or more bulging sections.

In another aspect, the undulating shape may have a shape that includes waves of 3 wavelengths or more. Since the undulating shape has a shape that includes waves of 3 wavelengths or more, a higher rigidity can be achieved.

In the front axle of the embodiment, the first slope section and the second slope section are preferably adjacent to each other.

In another aspect, in the front axle of the embodiment, an angle (angle X as described later) of the varying-slope section with respect to the vertical direction in a cross section perpendicular to the longitudinal direction LD may vary continuously along the longitudinal direction LD. Alternatively, the angle may vary discontinuously along the longitudinal direction LD.

The varying-slope section in a cross section perpendicular to the longitudinal direction LD may vary along the longitudinal direction LD such that a rotational reciprocal oscillation appears around a middle portion of the varying-slope section in the cross section. The "middle portion of the varying-slope section" as used herein refers to a portion that lies between the first connecting section and the second connecting section and is, for example, a central portion (a center point as described in the first embodiment and vicinities thereof). Alternatively, the varying-slope section in a cross section perpendicular to the longitudinal direction LD may vary along the longitudinal direction LD like a pendulum around the first connecting section or the second connecting section as a pivot. In view of strength, the flange parts, the web section, seat sections (spring attachment seats), and king-pin attachment sections are desirably integral with each other in the front axle. For the same reason, the front axle is desirably produced by forging.

Embodiments of the present invention will now be described with reference to the drawings. The embodiments described below are illustrative only and at least part of configurations of the embodiments below may be replaced with configurations described above. In the following description, like reference numerals are used to indicate like parts and redundant explanations thereof may be omitted. All drawings below are schematic, and thus they may have different shapes from actual cases and unnecessary parts may be omitted in the description.

### (First Embodiment)

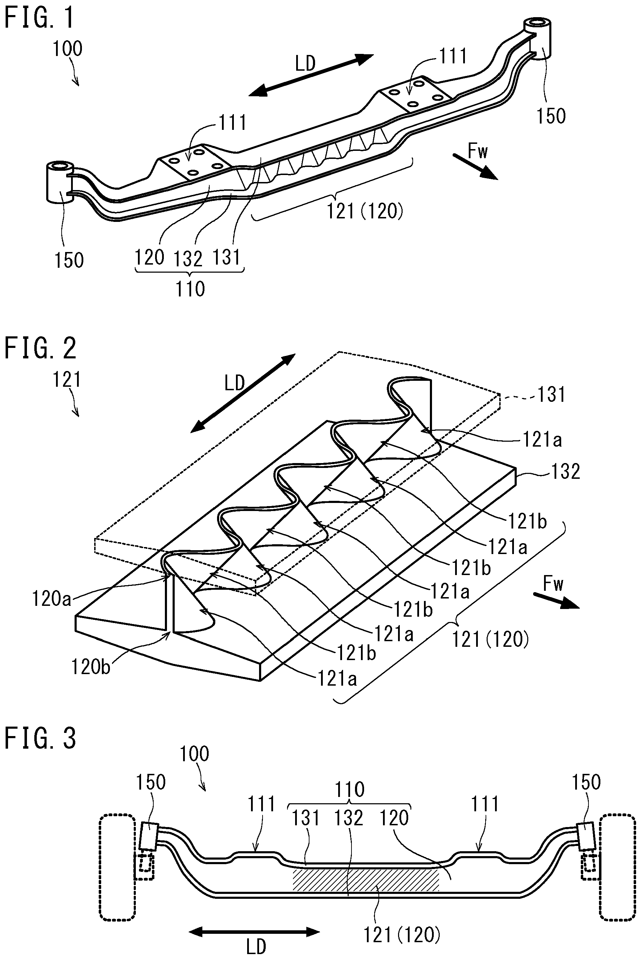

In the first embodiment, an example of the front axle of the embodiment will be described. A perspective view of a front axle 100 of the first embodiment is schematically illustrated in FIG. 1.

Referring to FIG. 1, the front axle (front axle beam) 100 includes a beam section 110, and two king-pin attachment sections 150 provided on both ends of the beam section 110 in the longitudinal direction LD, respectively. It should be noted that the longitudinal direction LD and the front or frontward direction Fw of the beam section 110 may be indicated in the figure. Each of the king-pin attachment sections 150 is provided with a through hole in which a king pin is attached. In general, the front axle 100 has a right-left symmetrical shape and a generally arcuate shape as a whole.

The beam section 110 includes a web section 120, a first flange part 131, and a second flange part 132. The first flange part 131 is located on the top, and the second flange part 132 is located below the first flange part 131. The web section 120 connects the first flange part 131 and the second flange part 132. In other words, the first flange part 131 and the second flange part 132 are opposite to each other. The web section 120 stands on the second flange part 132 and connects the first flange part 131 and the second flange part 132.

The first flange part 131 and the second flange part 132 each protrude frontward and rearward (in the vehicle-length direction) from upper and lower ends of the web section 120 in the vehicle-height direction, and substantially horizontally extend frontward and rearward in general. In this regard, the first flange part 131 and/or the second flange part 132 may not extend horizontally.

Two spring attachment seats 111 are formed on an upper surface of the beam section 110 (upper surface of the first flange part 131). Springs are arranged on the spring attachment seats 111 and the vehicle body (including an engine) is attached on the springs.

The web section 120 includes a varying-slope section 121. The varying-slope section 121 has slopes varying along the longitudinal direction LD such that the varying-slope section 121 undulates. In the example illustrated in FIG. 1, the varying-slope section 121 is formed between two spring attachment seats 111. However, the varying-slope section 121 may also be formed on other portions as necessary (the same applies to other embodiments).

A perspective view of a part of the varying-slope section 121 is schematically illustrated in FIG. 2. For ease of understanding, the outline of the first flange part 131 is indicated by a dashed line in the perspective view of FIG. 2. Further, a front view of the front axle 100 as viewed from the front is schematically illustrated in FIG. 3. In FIG. 3, the portion of the varying-slope section 121 is illustrated by hatching.

In FIG. 2, a connecting section between the web section 120 and the first flange part 131 is denoted as a first connecting section 120a and the connecting section between the web section 120 and the second flange part 132 is denoted as a second connecting section 120b. In the example described with the first embodiment, both of the first connecting section 120a and the second connecting section 120b have an undulating shape that undulates along the longitudinal direction LD. In other words, the first connecting section 120a has a bulging shape in the vehicle-length direction on the first flange part 131. The second connecting section 120b has a bulging shape in the vehicle-length direction on the second flange part 132.

The varying-slope section 121 includes a plurality of first slope sections 121a and a plurality of second slope sections 121b. The first slope sections 121a and the second slope sections 121b are located in an alternate manner along the longitudinal direction LD.

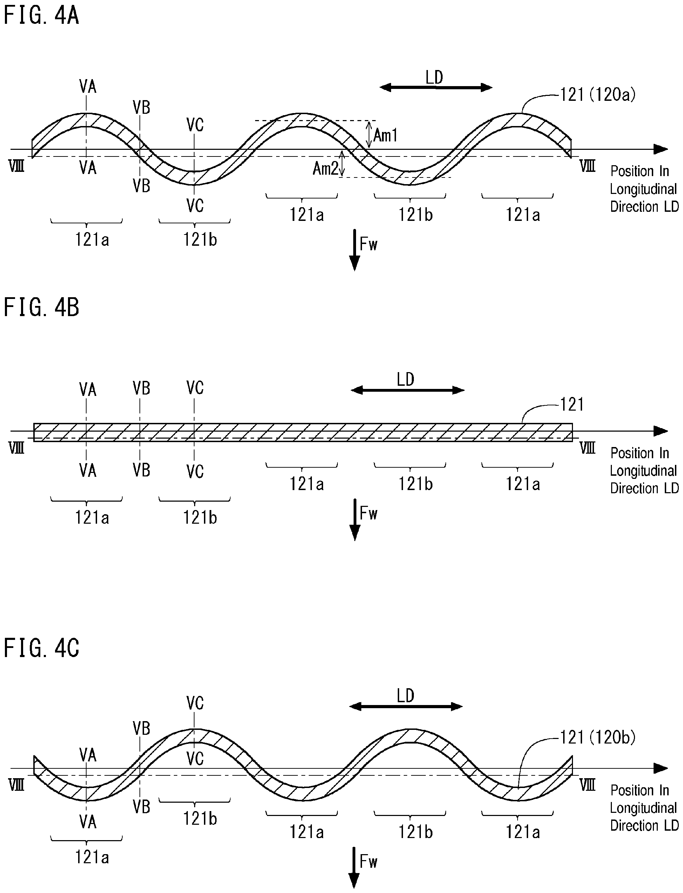

A part of a horizontal section of the varying-slope section 121 on the first connecting section 120a is schematically illustrated in FIG. 4A. A part of a horizontal section of the varying-slope section 121 at the middle point in the up-down direction of the varying-slope section 121 is schematically illustrated in FIG. 4B. A part of a horizontal section of the varying-slope section 121 on the second connecting section 120b is schematically illustrated in FIG. 4C.

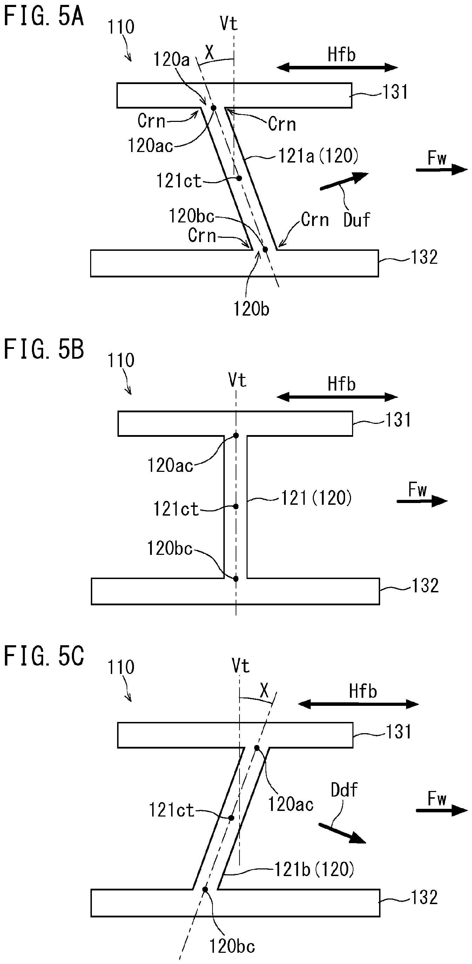

Cross sections taken along lines VA-VA, VB-VB, VC-VC in FIGS. 4A to 4C (cross sections perpendicular to the longitudinal direction LD) are schematically illustrated in FIG. 5A, FIG. 5B and FIG. 5C, respectively. The cross section illustrated in FIG. 5A is a cross section of the first slope sections 121a. The cross section illustrated in FIG. 5C is a cross section of the second slope sections 121b. The hatching is omitted in cross sections illustrated in FIG. 5A, FIG. 5B and FIG. 5C. The hatching may be omitted in subsequent figures that indicate a cross section perpendicular to the longitudinal direction LD.

When positions along the longitudinal direction LD are indicated on a horizontal axis and positions in the front-back direction are indicated on a longitudinal axis, the varying-slope section 121 on the first connecting section 120a has an undulating shape as illustrated in FIG. 4A. Similarly, the varying-slope section 121 on the second connecting section 120b has an undulating shape as illustrated in FIG. 4C.

As illustrated in FIG. 5A, each of the plurality of first slope sections 121a inclines in one direction with respect to the vertical direction (up-down direction) Vt in a cross section perpendicular to the longitudinal direction LD. On the other hand, as illustrated in FIG. 5C, each of the plurality of second slope sections 121b inclines in the opposite direction to the one direction with respect to the vertical direction Vt in a cross section perpendicular to the longitudinal direction LD.

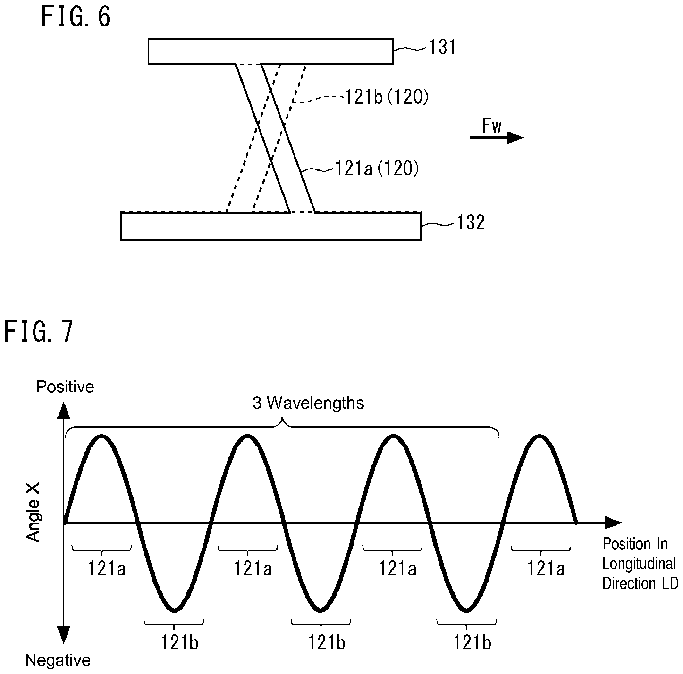

The first slope sections 121a and the second slope sections 121b are located in an alternate manner along the longitudinal direction LD. In other words, the slope sections form a diagonal structure (an element like a trussed structure). A superimposed view of the cross section in FIG. 5A and the cross section in FIG. 5C is schematically illustrated in FIG. 6. As illustrated in FIG. 6, the first slope section 121a and the second slope section 121b together form a diagonal structure. Accordingly, the front axle 100 that includes the varying-slope section 121 can achieve a high rigidity.

The sheet thickness of the varying-slope section 121 may be substantially constant regardless of the position or may vary depending on positions.

As part of the varying-slope section 121, a range in which the undulating shape of the connecting sections 120a and 120b includes waves having 2.5 wavelengths is indicated in FIGS. 4A to 4C. An example of amplitude of the undulating shape of the first slope sections 121a (amplitude Am1) and an example of amplitude of the undulating shape of the second slope sections 121b (amplitude Am2) are both illustrated in FIG. 4A. These amplitudes may be the same as each other or may be different from each other for the first connecting section 120a and the second connecting section 120b, and may or may not vary depending on the position in the longitudinal direction LD.

As illustrated in FIG. 4A and FIG. 4C, the varying-slope section 121 has the undulating shape. From a view point of theory of strength of materials, it can be said that the undulating shape provides a higher geometrical moment of inertia than a conventional straight shape, which is not an undulating shape, to improve rigidity.

The phase of the waves illustrated in FIG. 4A and the phase of the waves illustrated in FIG. 4C are shifted from each other such that the first slope sections 121a and the second slope sections 121b are located in an alternate manner along the longitudinal direction LD. In the example illustrated in FIGS. 4A to 4C, the phase of the waves illustrated in FIG. 4C is opposite to the phase of the waves illustrated in FIG. 4A, and specifically, is shifted by 180°.

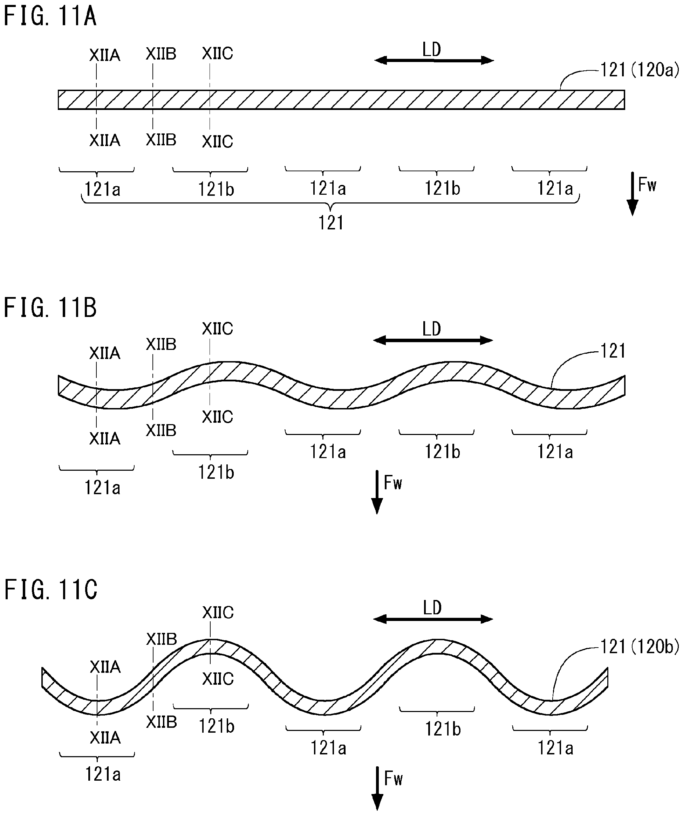

In the illustrated example, the varying-slope section 121 in FIG. 4B does not have an undulating shape. In other words, the first slope sections 121a and the second slope sections 121b have a straight-line shape in the horizontal section in the middle between the first flange part 131 and the second flange part 132. However, the varying-slope section 121 may have an undulating shape at the middle point in the up-down direction of the varying-slope section 121 (for example, see FIG. 11B described later).

As illustrated in FIG. 5A, a surface on the front side of the first slope section 121a inclines to face in an obliquely upward direction Duf in the cross section perpendicular to the longitudinal direction LD, and a surface on the rear side inclines to face obliquely downward. On the other hand, as illustrated in FIG. 5C, a surface on the front side of the second slope section 121b inclines to face in an obliquely downward direction Ddf in the cross section perpendicular to the longitudinal direction LD, and a surface on the rear side inclines to face obliquely upward.

Here, as illustrated in FIGS. 5A to 5C, an angle formed by the varying-slope section 121 and the vertical direction (up-down direction) Vt in the cross section perpendicular to the longitudinal direction LD is denoted as an angle X. More specifically, an angle formed by a line connecting a point 120ac with a point 120bc and the vertical direction Vt is denoted an angle X formed by the varying-slope section 121 and the vertical direction Vt. As illustrated in FIGS. 5A to 5C, the point 120ac is located at the center in the front-back direction Hfb of the first connecting section 120a in the cross section perpendicular to the longitudinal direction LD. The point 120bc is located at the center in the front-back direction Hfb of the second connecting section 120b in the cross section perpendicular to the longitudinal direction LD.

When the cross section is viewed such that the frontward direction Fw points rightward (in the state in FIGS. 5A to 5C), an angle in a counterclockwise direction is defined as a positive angle and an angle in a clockwise direction is defined as a negative angle. In this case, the angle X of the first slope section 121a illustrated in FIG. 5A is positive. On the other hand, the angle X of the second slope section 121b illustrated in FIG. 5C is negative. The angle X varies from positive to negative and vice versa alternately along the longitudinal direction LD. In a preferable example, the angle X varies continuously. An example of such variation in the angle X is illustrated in FIG. 7. As illustrated in FIG. 7, the angle X is positive in the first slope section 121a and the angle X is negative in the second slope section 121b. The angle X varies continuously with a change in position in the longitudinal direction LD. In this case, the first slope section 121a and the second slope section 121b are adjacent to each other. FIG. 7 illustrates waves having 3.5 wavelengths.

FIG. 7 illustrates an example in which the maximum absolute values of the angle X are the same for all the first slope sections 121a and the second slope sections 121b. However, the sections may each have a different maximum absolute value of the angle X. It should be noted that the maximum absolute value of the angle X is associated with the amplitude of the undulating shape.

FIGS. 5A to 5C illustrate a center point 121ct. The center point 121ct is a point located at the center of the front-back direction of the varying-slope section 121 in the horizontal section through the middle point of the varying-slope section 121 in the up-down direction.

The varying-slope section 121 in a cross section perpendicular to the longitudinal direction LD varies along the longitudinal direction LD such that a reciprocal oscillation including a rotation around a portion between the first connecting section 120a and the second connecting section 120b (which may be hereinafter referred to as "rotational reciprocal oscillation"). Although an example of rotational reciprocal oscillation around the center point 121ct is illustrated in the illustrated example, the center of the rotational reciprocal oscillation may be off the center point 121ct.

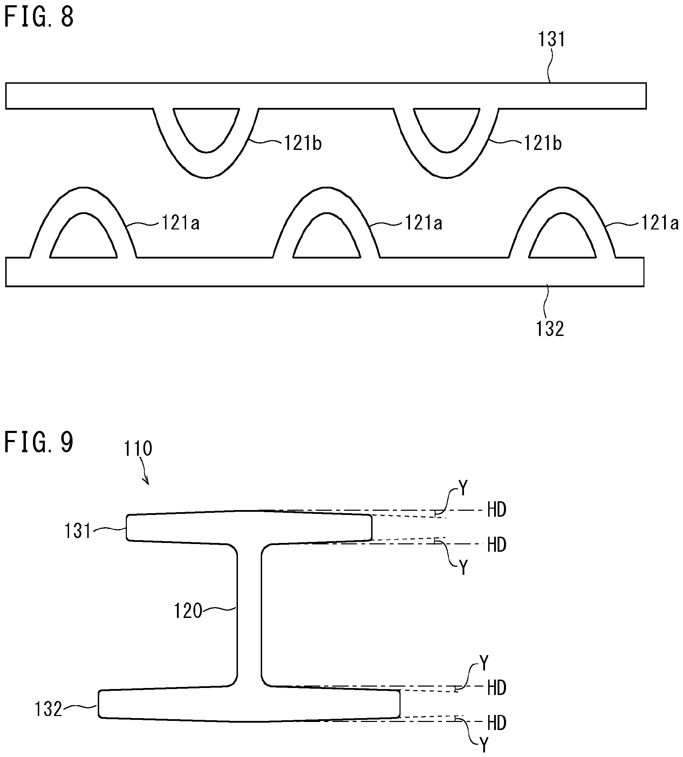

A portion of a section that passes through a point slightly offset in the frontward direction Fw from the center point 121ct in FIG. 5A and is in parallel to the vertical direction Vt and the longitudinal direction LD is schematically illustrated in FIG. 8 (hatching omitted). The section illustrated in FIG. 8 corresponds to a section taken along a line VIII-VIII in FIGS. 4A to 4C. As illustrated in FIG. 8, the first slope section 121a forms an arch section including the second flange part 132 as its base. The arch section has a half dome shape as viewed from the rear. On the other hand, the second slope section 121b forms an arch section including the first flange part 131 as its base. The arch section has a half dome shape as viewed from the front. As illustrated in FIG. 8, a number of arch shapes in different directions are located in the front axle 100. In contrast, a web section of a typical front axle is planar and does not have an arch shape. Accordingly, the front axle of the embodiment can achieve a higher rigidity than a typical front axle.

In schematic views of FIGS. 5A to 5C, indication related to a draft of the flange part is omitted. In this regard, the flange part of the front axle produced by typical die forging has a draft for removing from a die (a slope in the direction for removal from die) (the same applies to other embodiments). Such drafts are illustrated in FIG. 9. Referring to FIG. 9, a surface of the first flange part 131 inclines with respect to the horizontal direction HD and there exists a draft angle Y. Similarly, a surface of the second flange part 132 inclines with respect to the horizontal direction HD and there exists a draft angle Y. The draft angle Y may vary depending on the position on the flange part. In any case, the flange part, which is produced by a typical production method including a typical die forging process, has a shape for allowing removal from die.

In addition, edges of the flange part are not rounded in schematic views of FIGS. 5A to 5C. In this regard, edges of the flange part have rounded shapes (R shape) in general. Corners on the border between the flange part and the web section (corners Crn in FIG. 5A) also have rounded shapes in general (the same applies to other embodiments).

### (Second Embodiment)

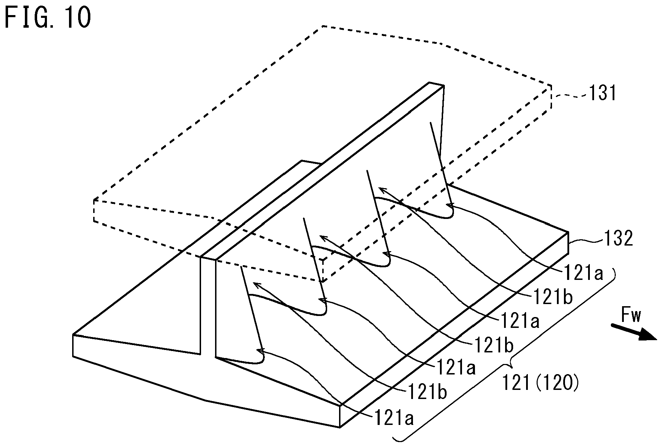

In the first embodiment, an example in which both the first connecting section 120a and the second connecting section 120b have undulating shapes is described. However, only one of the connecting sections may have an undulating shape. An example of a varying-slope section 121 of such a front axle 100 is illustrated in FIG. 10 in a partial perspective view. Further, partial horizontal sectional views are illustrated in FIGS. 11A to 11C.

FIG. 11A schematically illustrates a part of a horizontal section of the varying-slope section 121 on the first connecting section 120a. FIG. 11B schematically illustrates a part of a horizontal section of the varying-slope section 121 at the middle point in the up-down direction of the varying-slope section 121. FIG. 11C schematically illustrates a part of a horizontal section of the varying-slope section 121 on the second connecting section 120b.

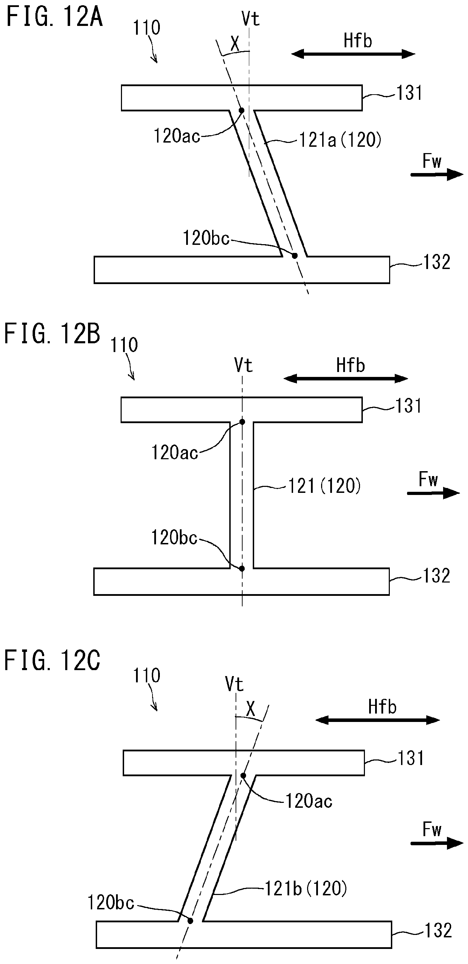

Cross sections taken along lines XIIA-XIIA, XIIB-XIIB, and XIIC-XIIC in FIGS. 11A to 11C (cross sections perpendicular to the longitudinal direction LD) are schematically illustrated in FIG. 12A, FIG. 12B and FIG. 12C, respectively. Since those portions except the varying-slope section 121 are similar to those of the front axle 100 described in the first embodiment, redundant explanations thereof will be omitted.

In the varying-slope section 121 illustrated in FIGS. 10 to 12C, only the second connecting section 120b of two connecting sections 120a and 120b has an undulating shape. The first connecting section 120a is in a straight-line shape. Referring to FIG. 11B, a web section 120 at the middle point between a first flange part 131 and a second flange part 132 in the horizontal section also has an undulating shape. In this regard, the amplitude thereof is about half of the amplitude of the undulating shape of the second connecting section 120b.

In the front axle 100 of the second embodiment, the varying-slope section 121 also includes a plurality of first slope sections 121a and a plurality of second slope sections 121b. The first slope sections 121a and the second slope sections 121b are located in an alternate manner along the longitudinal direction LD. As illustrated in FIG. 12A, each of the first slope sections 121a inclines in one direction with respect to the vertical direction (up-down direction) Vt in a cross section perpendicular to the longitudinal direction LD. On the other hand, as illustrated in FIG. 12C, each of the second slope sections inclines in the opposite direction to the one direction with respect to the vertical direction Vt in a cross section perpendicular to the longitudinal direction LD. As a result, the varying-slope section 121 has slopes varying along the longitudinal direction LD. Specifically, the varying-slope section 121 has slopes varying along the longitudinal direction LD like a pendulum around the first connecting section 120a as a pivot. In contrast to the illustrated example, the varying-slope section 121 may have slopes varying along the longitudinal direction LD like a pendulum around the second connecting section 120b as a pivot (inverted pendulum). In this case, the varying-slope section 121 has a shape such that the varying-slope section 121 in FIG. 10 is upside down. Alternatively, with FIG. 10 being turned 180°, the first flange part 131 may be considered as the second flange part and the second flange part 132 may be considered as the first flange part.

Also in the front axle 100 of the second embodiment, the angle X varies from positive to negative and vice versa alternately along the longitudinal direction LD as illustrated in FIG. 7.

In the front axle 100 of the second embodiment, the first slope section 121a and the second slope section 121b together form a diagonal structure. Further, it can be considered that up-down direction arch shapes including the first flange part 131 as the base and up-down direction arch shapes including the second flange part 132 as the base are located in an alternate manner. In addition, it is considered that longitudinal arch shapes are continuous in the longitudinal undulating shape. Accordingly, the front axle 100 of the second embodiment can also achieve a high rigidity.

### (Third Embodiment)

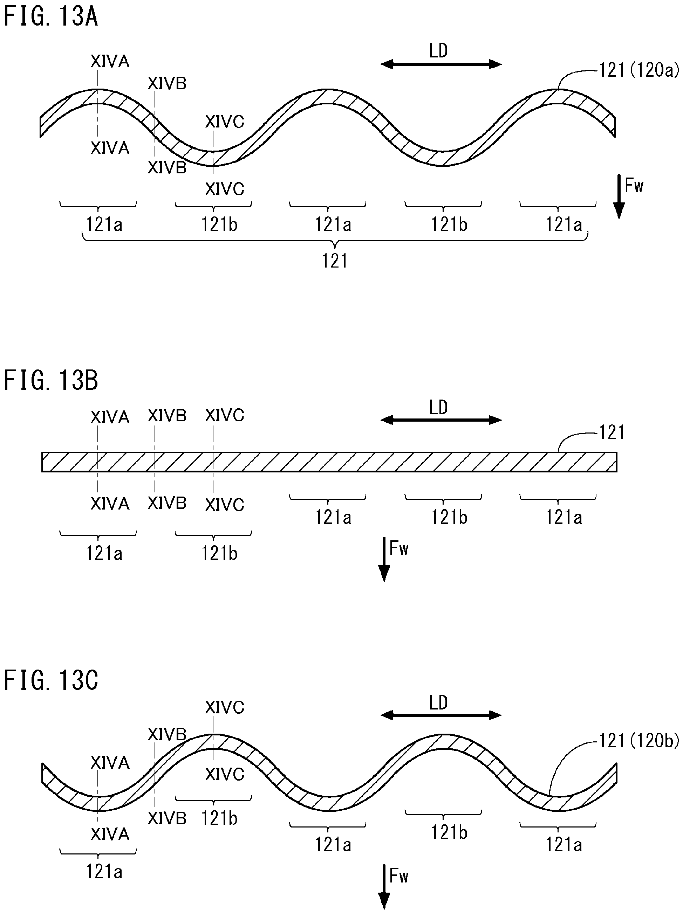

In the above embodiments, description has been made as to the case in which the cross section (cross section perpendicular to the longitudinal direction LD) of the varying-slope section 121 is in a straight-line shape (that is, the slope is constant over the cross section). However, the cross section of the varying-slope section 121 may not be in a straight-line shape. An example of a varying-slope section 121 of such a front axle 100 is illustrated in FIGS. 13A to 13C in horizontal sectional views.

FIG. 13A schematically illustrates a part of a horizontal section of the varying-slope section 121 on the first connecting section 120a. FIG. 13B schematically illustrates a part of a horizontal section of the varying-slope section 121 at the middle point in the up-down direction of the varying-slope section 121. FIG. 13C schematically illustrates a part of a horizontal section of the varying-slope section 121 on the second connecting section 120b. Since these sections are similar to the sections illustrated in FIGS. 4A to 4C, redundant explanations thereof will be omitted.

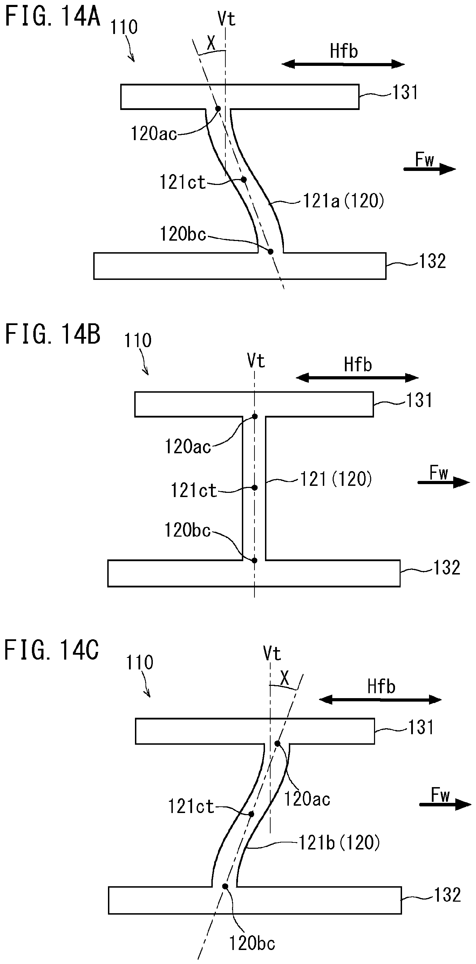

Cross sections taken along lines XIVA-XIVA, XIVB-XIVB, and XIVC-XIVC in FIGS. 13A to 13C (cross sections perpendicular to the longitudinal direction LD) are schematically illustrated in FIG. 14A, FIG. 14B and FIG. 14C, respectively. Since those portions except the varying-slope section 121 are similar to those of the front axle 100 described in the first embodiment, redundant explanations thereof will be omitted.

In the varying-slope section 121 illustrated in FIGS. 13A to 14C, both of the two connecting section 120a and 120b have undulating shapes. Similarly to the front axles of the above-described embodiments, the varying-slope section 121 includes a plurality of first slope sections 121a and a plurality of second slope sections 121b, and the slope sections are located in an alternate manner along the longitudinal direction LD. In other words, the varying-slope section 121 has slopes varying along the longitudinal direction LD such that the surface thereof undulates.

As illustrated in FIGS. 14A to 14C, the cross sections of the first and second slope section 121a and 121b of the front axle 100 of the third embodiment include curved portions, instead of a straight-line portion. Also in this case, each of the first slope sections 121a inclines in one direction with respect to the vertical direction (up-down direction) Vt in a cross section perpendicular to the longitudinal direction LD. On the other hand, each of the second slope sections 121b inclines in the opposite direction to the one direction with respect to the vertical direction Vt in a cross section perpendicular to the longitudinal direction LD.

In the front axle 100 of the third embodiment, it can be considered that the first slope section 121a and the second slope section 121b together form a diagonal structure. Further, the varying-slope section 121 includes an arch shape (half dome shape) including the first flange part 131 as its base and an arch shape (half dome shape) including the second flange part 132 as its base located in an alternate manner. Such half dome shape is effective to reduce weight and improve rigidity, the front axle 100 of the third embodiment can also achieve a high rigidity.

In the above example, description has been made as to the case in which both the first connecting section 120a and the second connecting section 120b have undulating shapes. However, either one of the connecting sections may only have an undulating shape. For example, in the front axle 100 described in the second embodiment, the cross section (cross section perpendicular to the longitudinal direction LD) of the varying-slope section 121 may include a curved portion. In such a case, since a half dome shape is also formed, weight reduction and a high rigidity can be achieved.

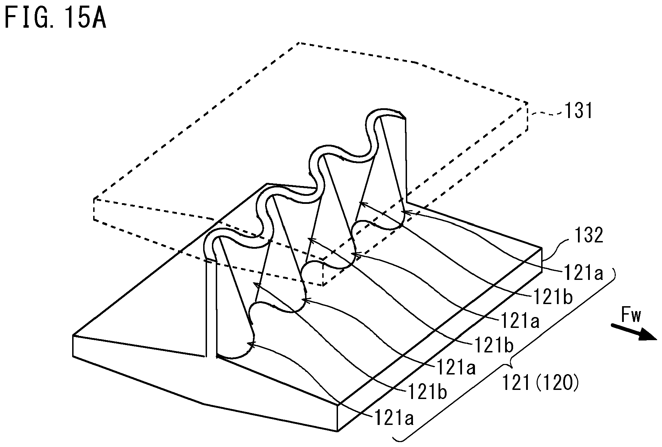

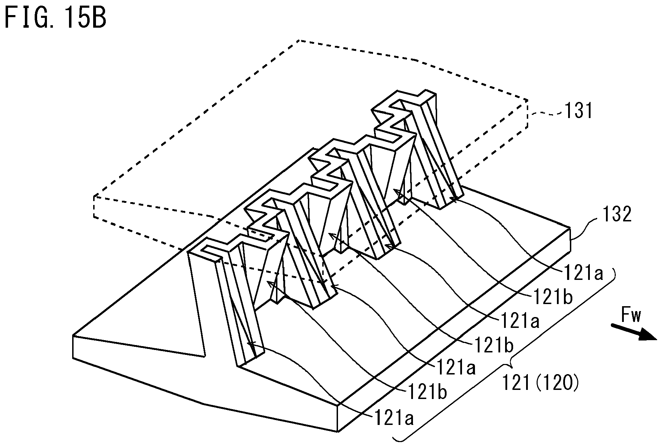

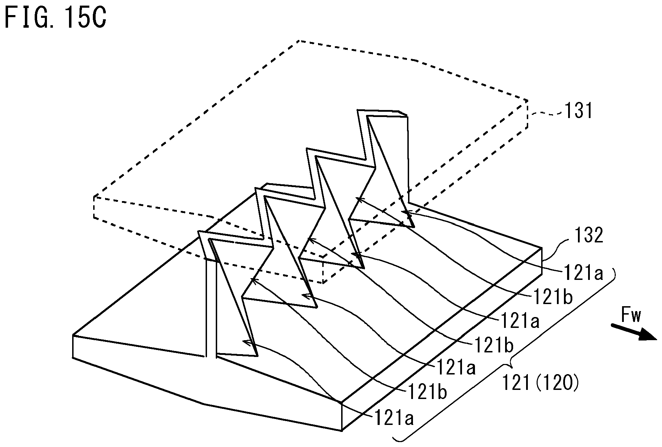

The undulating shape is not limited to the shapes illustrated in the above embodiments. For example, the undulating shape may be in a shape such that semicircles are connected as illustrated in FIG. 15A. Alternatively, the undulating shape may be a rectangular-wave shape as illustrated in FIG. 15B. Alternatively, the undulating shape may be a triangular-wave shape as illustrated in FIG. 15C. These undulating shapes may be replaced with any other undulating shapes in the above embodiments. Even in the case in which any of the undulating shapes is used, the above-described structure (diagonal structure, arch shape, and half dome shape) can be achieved. Accordingly, even with the undulating shapes, the above-described effects can be produced.

A result of simulation conducted by the present inventors reveals that the undulating shape preferably includes waves of 3 wavelengths or more. In other words, it is preferable that the bulging shape in the vehicle-length direction included in the connecting section 120a and/or 120b is in a shape including 6 or more bulging sections.

### (Exemplary Production Method for Front Axle)

The production method for the front axle of the embodiment is not particularly limited and any known technique can be used to produce the front axle. For example, the front axle of the embodiment can be produced by a production method including a hot forging process. An example of the production method for the front axle will now be described. The production method for the front axle of the embodiment is not limited and any other method than the method described below can be used.

First, a billet to be a material is prepared. Next, the billet is processed into a preform that has a shape suitable for die forging (preforming process). The preforming process may include processes such as rolling of the billet and bending. The preform is then die forged to shape a forged product that has a shape of the front axle (die forging process). In the die forging process, the undulating shape is provided for the web section. The preforming and die forging processes are conducted as a hot processing. In this way, the forged product that has a shape of the front axle is obtained. The resultant forged product may be subjected to various other processes as necessary. Examples of such processes include flash-trimming, coining, bend straightening, heat treatment, surface treatment, boring, and painting.

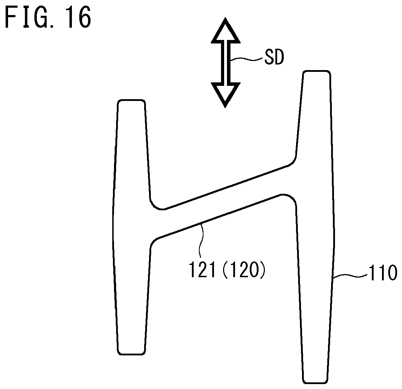

An example of die forging process for producing the front axle of the embodiment will be described. FIG. 16 illustrates a press direction SD of a press die and a cross section of a die-forged beam section 110 (including the varying-slope section 121). The beam section 110 illustrated in FIG. 16 corresponds to the beam section 110 of the front axle 100 described in the second embodiment.

When a roughly shaped front axle is to be formed by die forging, the forging is generally performed by applying the die on the side of the front axle corresponding to the front-back direction. At this time, forming by die forging is not effected on a portion resulting in a reverse draft during removal from the die. Accordingly, it is preferable that the web section does not include a shape resulting in a reverse draft for die forging. In other words, it is preferable that the web section does not include a portion that is out of view as viewed from the front and rear. The varying-slope section 121 described in the first to third embodiments does not include a shape resulting in a reverse draft for die forging. Accordingly, the varying-slope section 121 of the front axle 100 described in the first to third embodiments can easily be formed by use of a typical die forging process provided that the undulating shape is reflected in die design. In other words, the front axle of the embodiment can easily be produced by a typical production method.

### INDUSTRIAL APPLICABILITY

The present invention can be used for a front axle beam.

### REFERENCE SIGNS LIST

- 100:: FRONT AXLE (FRONT AXLE BEAM)
- 110:: BEAM SECTION
- 120:: WEB SECTION
- 120a:: FIRST CONNECTING SECTION
- 120b:: SECOND CONNECTING SECTION
- 121:: VARYING-SLOPE SECTION
- 121a:: FIRST SLOPE SECTION
- 121b:: SECOND SLOPE SECTION
- 131:: FIRST FLANGE PART
- 132:: SECOND FLANGE PART
- 150:: KING-PIN ATTACHMENT SECTION
- LD:: LONGITUDINAL DIRECTION
- Fw:: FRONTWARD DIRECTION

## Claims

1. A front axle beam comprising: a beam section including a first flange part, a second flange part opposite to the first flange part, and a web section connected with the first flange part and the second flange part in a standing manner; and a king-pin attachment sections on both ends of the beam section in a longitudinal direction, wherein
the web section includes:
a first slope section inclining in one direction with respect to a vehicle-height direction in a cross section of the beam section; and
a second slope section inclining in an opposite direction to the one direction with respect to the vehicle-height direction in another cross section of the beam section.

2. The front axle beam according to Claim 1, wherein the first slope section and the second slope section are located in an alternate manner in the longitudinal direction.

3. The front axle beam according to Claim 1 or 2, wherein a first connecting section between the web section and the first flange part has a bulging shape in a vehicle-length direction on the first flange part.

4. The front axle beam according to Claim 3, wherein a second connecting section between the web section and the second flange part has a bulging shape in the vehicle-length direction on the second flange part.

5. The front axle beam according to Claim 4, wherein the first slope section and the second slope section are in a straight-line shape in a section in a middle between the first flange part and the second flange part.

6. The front axle beam according to any one of Claims 3 to 5, wherein the bulging shape in the vehicle-length direction has a shape that includes 6 or more bulging sections.

7. The front axle beam according to any one of Claims 1 to 6, wherein the first slope section and the second slope section are adjacent to each other.
